# EUROPÄISCHE PATENTSCHRIFT

(11) **EP 2 483 115 B1**
(45) Veröffentlichungstag und Bekanntmachung des Hinweises auf die Patenterteilung: **02.04.2014**
(21) Anmeldenummer: 10771352.1
(22) Anmeldetag: 24.08.2010
(51) Int. Cl.: B60T 8/48, B60T 13/14, B60T 17/00, B60T 17/06, F15B 1/04, F15B 1/24

(54) **INTEGRIERTE HYDRAULIKSPEICHERANORDNUNG**
INTEGRATED HYDRAULIC ACCUMULATOR ARRANGEMENT
ENSEMBLE ACCUMULATEUR HYDRAULIQUE INTÉGRÉ

(30) Priorität: 29.09.2009 DE 102009048668
(43) Veröffentlichungstag der Anmeldung: 08.08.2012
(73) Patentinhaber: Siemens Aktiengesellschaft, 80333 München (DE)
(72) Erfinder: LIERMANN, Matthias, 45134 Essen (DE); STAMMEN, Christian, 41564 Kaarst (DE)
(86) Internationale Anmeldenummer: PCT/EP2010/062287
(87) Internationale Veröffentlichungsnummer: WO 2011/038997

(56) Entgegenhaltungen:
- EP-A2- 0 890 494
- WO-A2-01/75312
- WO-A2-03/016723
- DE-A1- 3 041 185
- DE-A1- 3 901 261
- DE-A1- 10 207 598
- DE-A1- 19 616 428
- GB-A- 2 263 753
- US-A1- 2004 250 866
- US-B1- 6 478 051

## Beschreibung

Die Erfindung betrifft eine Hydraulikspeicheranordnung für eine hydraulische Bremse.

Hydraulische Speicher, die beispielsweise Teil einer hydraulischen Bremse für Fahrzeuge sind, benötigen in der Regel Federelemente, um eine beim Bremsen erforderliche Charakteristik zwischen dem aufgenommenen Volumen an Hydraulikflüssigkeit und dem vom Speicher erzeugten Druck zu gewährleisten. Aus diesem Grunde werden hydraulische Speicher zusammen mit Gasfedern oder Spiralfedern eingesetzt. Gasfedern kommen zum Einsatz, wenn ein zu hohes Eigengewicht des Hydraulikspeichers vermieden werden soll, da Gasfedern wesentlich leichter und kompakter als mechanische Federn sind. Ein Nachteil von Gasfedern ist jedoch die im Vergleich zu mechanischen Federn große Temperaturabhängigkeit der Federkennlinie. So nimmt beispielsweise bei einer sinkenden Temperatur der Gasdruck einer Gasfeder ab. Aus diesem Grunde werden im Schienenverkehr fast ausnahmslos Spiralfedern eingesetzt. Aber auch für Bremsanlagen von Kraftfahrzeugen sind mit Spiralfedern ausgestattete Druckmittelspeicher verwendbar, so wie dies beispielsweise aus der Druckschrift GB 2 263 753 A bekannt ist. Bei dem in der Druckschrift GB 2 263 753 A offenbarten Druckmittelspeicher sind eine Druckmittel aufnehmende, volumenveränderbare Kammer und eine mit der Atmosphäre in Verbindung stehende Atmungskammer in einem Gehäuse angeordnet, wobei sich eine Spiralfeder innerhalb der Atmungskammer erstreckt. Spiralfedern haben jedoch den Nachteil, dass diese einen großen Bauraum benötigen, der insbesondere bei Schienenfahrzeugen oftmals nicht zur Verfügung steht.

Aus der Druckschrift WO 01/75312 A2 ist eine Hydraulikspeicheranordnung für eine hydraulische Bremse mit einer Hochdruckspeicherkammer, einer Mitteldruckspeicherkammer und einer Atmosphärendruckspeicherkammer bekannt, bei der die Hochdruckspeicherkammer, die Mitteldruckspeicherkammer und die Atmosphärendruckspeicherkammer in einem gemeinsamen Gehäuse angeordnet sind, das zusammen mit einem beweglichen in dem Gehäuse geführten Hochdruckkolben die Hochdruckspeicherkammer begrenzt.

Ausgehend hiervon ist es Aufgabe der Erfindung, eine Hydraulikspeicheranordnung bereitzustellen, die kompakt und leicht ist.

Die Erfindung löst diese Aufgabe mit einer Hydraulikspeicheranordnung für eine hydraulische Bremse gemäß Patentanspruch 1, bei der das Gehäuse zusammen mit einem beweglich in dem Gehäuse geführten Mitteldruckkolben die Mitteldruckspeicherkammer begrenzt, wobei sich eine in dem Gehäuse angeordnete Hochdruckfeder außerhalb der Hochdruckspeicherkammer an dem Hochdruckkolben und eine in dem Gehäuse angeordnete Mitteldruckfeder außerhalb der Mitteldruckspeicherkammer an dem Mitteldruckkolben abstützen.

Erfindungsgemäß sind drei verschiedene Speicher in einem gemeinsamen, alle Speicherkammern umschließenden Gehäuse angeordnet. Dabei ist neben einer Atmosphärendruckspeicherkammer, die einen notwendigen Vorrat an Hydraulikflüssigkeit bereitstellt, eine Mitteldruckspeicherkammer vorgesehen. Eine Mitteldruckspeicherkammer ist erforderlich, um den Eintritt von Luft in das hydraulische System zu verhindern. Der Mitteldruckspeicher stellt eine Druckvorspannung auf einen geringen Überdruck gegenüber dem Atmosphärendruck bereit. Dieser geringe Überdruck wird hier Mitteldruck genannt. Darüber hinaus wird bei einer hydraulischen Bremse ein Hochdruckspeicher eingesetzt, um beispielsweise eine bei einem Bremsprozess gewonnene Energie für einen nächsten Arbeitszyklus der Bremse zu speichern. Aus diesen Gründen werden ebenfalls neben einem Atmosphärendruckspeicher, der auch als Reservoir bezeichnet werden kann, ein Hochdruckspeicher und ein Mitteldruckspeicher gleichzeitig eingesetzt.

Die erfindungsgemäße Hydraulikspeicheranordnung besteht ferner aus einem Gehäuse und zwei Kolben, wobei die Kolben jeweils die Hochdruckspeicherkammer und die Mitteldruckspeicherkammer begrenzen. Beide Kolben sind mit Federkraft beaufschlagt. Daher sind im Rahmen der Erfindung zwei Federn vorgesehen, die sich jeweils an einem Kolben abstützen. Da unterschiedliche Druckfedern benutzt werden, sind die Kolben unterschiedlich stark vorgespannt, so dass aufgrund ihrer Beweglichkeit die hydraulische Flüssigkeit in der Hochdruckspeicherkammer beziehungsweise der Mitteldruckspeicherkammer mit unterschiedlichem Druck beaufschlagt sind. Dabei ist es selbstverständlich erforderlich, dass die Kolben eine Dichtwirkung an der Gehäuseinnenwandung entfalten, so dass keine Hydraulikflüssigkeit aus der jeweiligen Speicherkammer austreten kann. Hierzu sind zweckmäßige Dichtelemente, wie federnd gelagerte Kolbenringe oder dergleichen, vorgesehen.

Erfindungsgemäß ist lediglich ein Gehäuse für drei hydraulische Speicherkammern erforderlich. Hierdurch wird zum einerseits Gewicht eingespart. Darüber hinaus ist die erfindungsgemäße Hydraulikspeicheranordnung auch kompakt und kann einfach verbaut werden.

Zweckmäßigerweise ist das Gehäuse hohlzylindrisch ausgestaltet, wobei die Hochdruckspeicherkammer und Mitteldruckspeicherkammer an voneinander abgewandten Seiten des hohlzylindrischen Gehäuses ausgebildet sind. Bei einer hohlzylindrischen Ausgestaltung des Gehäuses können die in der Regel formkomplementär zu einem Gehäusebereich ausgebildeten Kolben ebenfalls zylindrisch ausgebildet werden. Mit anderen Worten sind marktübliche zylindrische Kolben im Rahmen der Erfindung einsetzbar, wodurch die Kosten der hydraulischen Speicheranordnung verringert sind.

Zweckmäßigerweise sind die Mitteldruckfeder und die Hochdruckfeder als Spiralfedern ausgestaltet, wobei sich die Mitteldruckfeder innerhalb der Hochdruckfeder oder die Hochdruckfeder innerhalb der Mitteldruckfeder erstreckt. Gemäß dieser vorteilhaften Weiterentwicklung erstrecken sich die Spiralfedern ineinander und daher in dem gleichen Bauraum. Die Hydraulikspeicheranordnung ist somit noch kompakter.

Zweckmäßigerweise ist die Hochdruckfeder an ihrer von dem Hochdruckkolben abgewandten Seite an dem Gehäuse abgestützt, wobei die Mitteldruckfeder an ihrer von dem Mitteldruckkolben abgewandten Seite an dem Hochdruckkolben abgestützt ist. Gemäß dieser vorteilhaften Weiterentwicklung wird die Druckkraft der Mitteldruckfeder auch für die Hochdruckspeicherkammer ausgenutzt. Aufgrund des in der Regel geringen Volumens an Hydraulikflüssigkeit in dem Hochdruckspeicher kommt es selbst bei vollständiger Entleerung des Hochdruckspeichers zu einer vergleichsweise geringen Verschiebung des Hochdruckkolbens, so dass sich der Druck in der Mitteldruckspeicherkammer bei einer Bewegung des Hochdruckkolbens nur geringfügig verändert. Diese leichten Druckveränderungen sind bei einer hydraulischen Bremse hinnehmbar.

Zweckmäßigerweise sind Anschlagsbegrenzungen zum Begrenzen einer Bewegung des Hochdruckkolbens und/oder des Mitteldruckkolbens vorgesehen. Die Anschläge sind zweckmäßigerweise so gewählt, dass ein ausreichendes Volumen für den jeweiligen Speicher bereitgestellt ist.

Gemäß einer diesbezüglichen Weiterentwicklung begrenzt der Mitteldruckkolben an seiner von der Mitteldruckspeicherkammer abgewandten Seite die Atmosphärendruckspeicherkammer. Gemäß dieser vorteilhaften Weiterentwicklung kann der Mitteldruckspeicher Hydraulikflüssigkeit aus der Atmosphärendruckspeicherkammer erhalten, worauf später noch genauer eingegangen werden wird.

Zweckmäßigerweise ist der Mitteldruckkolben in dem Gehäuse längs beweglich geführt, wobei zwei Anschläge vorgesehen sind, welche die Längsbewegung des Mitteldruckkolbens jeweils in eine Richtung begrenzen.

Zweckmäßigerweise weist der Mitteldruckkolben zwei Ventile auf, die jeweils mit einem Anschlag zusammenwirken und beim Kontakt des Mitteldruckkolbens mit einem jeweils zugeordneten Anschlag die Atmosphärendruckspeicherkammer beziehungsweise einen Außenanschluss des Gehäuses mit der Mitteldruckspeicherkammer verbinden.

Weitere Vorteile und Ausgestaltungen der Erfindung sind Gegenstand der nachfolgenden Beschreibung eines Ausführungsbeispiels der Erfindung unter Bezug auf die beigeschlossene Figur, wobei die
- Figur: ein Ausführungsbeispiel der erfindungsgemäßen Hydraulikspeicheranordnung in einer teilweise geschnittenen Seitenansicht zeigt.

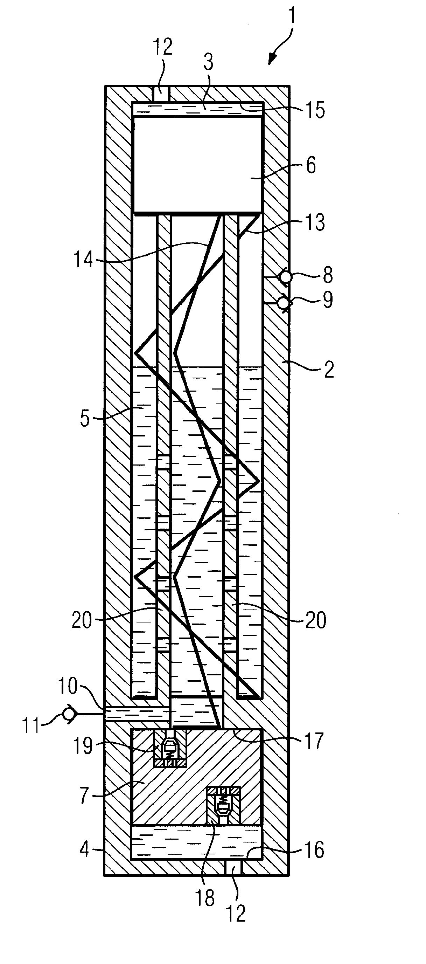

Die Figur zeigt eine teilweise geschnittene Ansicht eines Ausführungsbeispiels einer erfindungsgemäßen Hydraulikspeicheranordnung 1. Die Hydraulikspeicheranordnung 1 verfügt über ein hohlzylindrisches Gehäuse 2, in dem eine Hochdruckspeicherkammer 3, eine Mitteldruckspeicherkammer 4 sowie eine Atmosphärendruckspeicherkammer 5 vorgesehen sind. Die Hochdruckspeicherkammer 3 ist zum einen von dem Gehäuse 2 sowie von einem Hochdruckkolben 6 begrenzt, der dichtend und beweglich in dem Gehäuse 2 gelagert ist, so dass eine Leckage der Hydraulikflüssigkeit, mit welcher der Hochdruckspeicher 3 befüllt ist, trotz der Bewegungsfreiheit vermieden ist. Das Gehäuse 2 und ein Mitteldruckkolben 7 begrenzen die Mitteldruckspeicherkammer 4 entsprechend. Die Atmosphärendruckspeicherkammer 5 ist ebenfalls durch das Gehäuse 2 und den Mitteldruckkolben 7 begrenzt. Mit anderen Worten trennt der Mitteldruckkolben 7 der Atmosphärendruckspeicherkammer 5 von die Mitteldruckspeicherkammer 4. Zum Atmen des Reservoirs sind in dem Gehäuse 2 Durchgangsventile 8 und 9 vorgesehen, die sich durch die Seitenwandung des Gehäuses 2 erstrecken und einen Druckausgleich mit der Außenatmosphäre ermöglichen. Darüber hinaus kommuniziert die Atmosphärendruckspeicherkammer 5 mit einem Sauganschluss 10, der mit einem Rückschlagventil 11 ausgerüstet ist.

Die Hochdruckspeicherkammer 3 sowie die Mitteldruckspeicherkammer 4 sind ebenfalls jeweils mit einem Außenanschluss 12 ausgerüstet. Zum Erzeugen des gewünschten Hydraulikdruckes sind eine Hochdruckfeder 13 beziehungsweise eine Mitteldruckfeder 14 vorgesehen, wobei die Hochdruckfeder 13 einerseits an dem Hochdruckkolben 6 und an ihrer von dem Hochdruckkolben 6 abgewandten Seite an dem Gehäuse 2 abgestützt ist. Die Mitteldruckfeder 14 ist einerseits an dem Mitteldruckkolben 7 und andererseits, also an ihrer von dem Mitteldruckkolben 7 abgewandten Seite, an dem Hochdruckkolben 6 abgestützt. Dabei sind sowohl die Hochdruckfeder 13 als auch die Mitteldruckfeder 14 als Schraubenfedern oder mit anderen Worten Spiralfedern ausgestaltet, die sich ineinander erstrecken. In dem gezeigten Ausführungsbeispiel erstreckt sich die Mitteldruckfeder 14 innerhalb der Hochdruckfeder 13. Dabei durchragen die Hochdruckfeder 13 und die Mitteldruckfeder 14 den Atmosphärendruckspeicher 5 der Hydraulikspeicheranordnung. Auf diese Art und Weise ist eine kompakte Speicheranordnung bereitgestellt, die insbesondere für hydraulische Bremsen in Schienenfahrzeugen zweckmäßig ist. Die Hydraulikanordnung ist darüber hinaus leicht.

Das Volumen der Hochdruckspeicherkammer 3 ist im Vergleich zu den übrigen Speichern gering, so dass sich selbst bei einer vollständigen Entleerung der Hochdruckspeicherkammer 3 die Lage des Hochdruckkolbens 6 nur wenig ändert. Zu hohe Druckschwankungen im Mitteldruckspeicher 4 sind daher vermieden.

Sowohl der Hochdruckkolben 6 als auch der Mitteldruckkolben 7 sind längsbeweglich in dem Gehäuse 2 geführt. Sie führen mit anderen Worten eine Hubbewegung aus. Die Hubbewegung des Hochdruckkolbens 6 ist in einer Richtung anschlagbegrenzt. Mit anderen Worten schlägt der Hochdruckkolben 6 bei einer vollständigen Entleerung der Hochdruckspeicherkammer 3 an einer als Anschlag wirkenden ersten Stirnseite 15 des Gehäuses 2 an. Entsprechendes gilt für den Mitteldruckkolben 7, der an die zweite Stirnseite 16 des Gehäuses 2 anschlägt. Darüber hinaus ist für den Mitteldruckkolben ein zweiter Anschlag 17 vorgesehen, welcher an der von der Stirnseite 16 abgewandten Seite des Mitteldruckkolbens 7 angeordnet ist. Somit sind bei Bewegungsrichtungen des Mitteldruckkolbens begrenzt.

Die Anschläge 16 und 17 wirken mit zwei Ventilen 18 und 19 zusammen, die in dem Mitteldruckkolben 7 angeordnet sind. Erreicht der Mitteldruckkolben 7 den unteren Anschlag 16, ist die Mitteldruckspeicherkammer 4 vollständig entleert. Das untere Ventil 18 öffnet jedoch in diesem Fall, so dass Hydraulikflüssigkeit aus der Atmosphärendruckspeicherkammer 5 über den Mitteldruckkolben 7 in den Außenanschluss 12 der Mitteldruckspeicherkammer 4 fließen kann. Erreicht der Mitteldruckkolben 7 den anderen Anschlag 17, ist die Mitteldruckspeicherkammer 4 vollständig mit Hydraulikflüssigkeit gefüllt. Das Ventil 19 öffnet, so dass überflüssige Hydraulikflüssigkeit von der Mitteldruckspeicherkammer in die Atmosphärendruckspeicherkammer 5 entspannt werden kann. In dem Gehäuse 2 können darüber hinaus auch Verstärkungsstege 20 ausgebildet sein.

Anschließend sei angemerkt, dass der Hydraulikdruck in der Hochdruckkammer 3 großer ist als in der Mitteldruckspeicherkammer 4. Der Druck in der Mitteldruckspeicherkammer 4 ist hingegen größer als der Atmosphärendruck.

## Patentansprüche

1. Hydraulikspeicheranordnung (1) für eine hydraulische Bremse mit einer Hochdruckspeicherkammer (3), einer Mitteldruckspeicherkammer (4) und einer Atmosphärendruckspeicherkammer (5), wobei die Hochdruckspeicherkammer (3), die Mitteldruckspeicherkammer (4) und die Atmosphärendruckspeicherkammer (5) in einem gemeinsamen Gehäuse (2) angeordnet sind, das zusammen mit einem beweglich in dem Gehäuse (2) geführten Hochdruckkolben (6) die Hochdruckspeicherkammer (3) begrenzt, **dadurch gekennzeichnet, dass** das Gehäuse (2) zusammen mit einem beweglich in dem Gehäuse (2) angeordneten Mitteldruckkolben (7) die Mitteldruckspeicherkammer (4) begrenzt,
wobei sich eine in dem Gehäuse (2) angeordnete Hochdruckfeder (13) außerhalb der Hochdruckspeicherkammer (3) an dem Hochdruckkolben (6) und eine in dem Gehäuse (2) angeordnete Mitteldruckfeder (14) außerhalb der Mitteldruckspeicherkammer (4) an dem Mitteldruckkolben (7) abstützen.

2. Hydraulikspeicheranordnung (1) nach Anspruch 1,
**dadurch gekennzeichnet, dass** das Gehäuse (2) hohlzylindrisch ausgestaltet ist, wobei die Hochdruckspeicherkammer (3) und die Mitteldruckspeicherkammer (4) an voneinander abgewandten Seiten des hohlzylindrischen Gehäuses (2) ausgebildet sind.

3. Hydraulikspeicheranordnung (1) nach Anspruch 2,
**dadurch gekennzeichnet, dass** die Mitteldruckfeder (14) und die Hochdruckfeder (13) als Spiralfedern ausgestaltet sind, wobei sich die Mitteldruckfeder (14) innerhalb der Hochdruckfeder (13) oder die Hochdruckfeder (13) innerhalb der Mitteldruckfeder (14) erstreckt.

4. Hydraulikspeicheranordnung (1) nach Anspruch 3,
**dadurch gekennzeichnet, dass** die Hochdruckfeder (13) an ihrer von dem Hochdruckkolben (6) abgewandten Seite an dem Gehäuse (2) abgestützt ist, wobei die Mitteldruckfeder (14) an ihrer von dem Mitteldruckkolben (7) abgewandten Seite an dem Hochdruckkolben (6) abgestützt ist.

5. Hydraulikspeicheranordnung (1) nach einem der vorhergehenden Ansprüche,
**gekennzeichnet durch** Anschlagsbegrenzungen (15,16,17) zum Begrenzen einer Bewegung des Hochdruckkolbens (6) und/oder des Mitteldruckkolbens (7).

6. Hydraulikbremsanordnung (1) nach Anspruch 5,
**dadurch gekennzeichnet, dass** der Mitteldruckkolben (7) an seiner von der Mitteldruckspeicherkammer (4) abgewandten Seite die Atmosphärendruckspeicherkammer (5) begrenzt.

7. Hydraulikkammeranordnung (1) nach Anspruch 6,
**dadurch gekennzeichnet, dass** der Mitteldruckkolben (7) in dem Gehäuse (2) längsbeweglich geführt ist und zwei Anschläge (16,17) vorgesehen sind, welche die Längsbewegung des Mitteldruckkolbens (7) in jeweils einer Richtung begrenzen.

8. Hydraulikspeicheranordnung (1) nach Anspruch 7,
**dadurch gekennzeichnet, dass** der Mitteldruckkolben (7) zwei Ventile (18,19) aufweist, die jeweils mit einem Anschlag (16,17) zusammenwirken und beim Kontakt des Mitteldruckkolbens (7) mit den jeweils zugeordneten Anschlag (16,17) die Atmosphärendruckspeicherkammer (5) beziehungsweise einen Außenanschluss (12) des Gehäuses (2) mit der Mitteldruckspeicherkammer (4) verbinden.

## Claims

1. Hydraulic accumulator arrangement (1) for a hydraulic brake having a high-pressure storage chamber (3), a medium-pressure storage chamber (4) and an atmospheric-pressure storage chamber (5), wherein the high-pressure storage chamber (3), the medium-pressure storage chamber (4) and the atmospheric-pressure storage chamber (5) are arranged in a common housing (2), which together with a high-pressure piston (6) that is guided in such a manner as to be able to move within the housing (2) delimits the high-pressure storage chamber (3), **characterized in that** the housing (2) together with a medium-pressure piston (7) that is arranged in such a manner as to be able to move within the housing (2) delimits the medium-pressure storage chamber (4), wherein a high-pressure spring (13) arranged in the housing (2) is supported outside the high-pressure storage chamber (3) on the high-pressure piston (6) and a medium-pressure spring (14) arranged in the housing (2) is supported outside the medium-pressure storage chamber (4) on the medium-pressure piston (7).

2. Hydraulic accumulator arrangement (1), according to Claim 1, **characterized in that** the housing (2) is embodied in a hollow-cylindrical manner, wherein the high-pressure storage chamber (3) and the medium-pressure storage chamber (4) are embodied on mutually remote sides of the hollow-cylindrical housing (2).

3. Hydraulic accumulator arrangement (1), according to Claim 2, **characterized in that** the medium-pressure spring (14) and the high-pressure spring (13) are embodied as helical springs, wherein the medium-pressure spring (14) extends within the high-pressure spring (13) or the high-pressure spring (13) extends within the medium-pressure spring (14).

4. Hydraulic accumulator arrangement (1) according to Claim 3, **characterized in that** the high-pressure spring (13) is supported on its side remote from the high-pressure piston (6) on the housing (2), wherein the medium-pressure spring (14) is supported on its side remote from the medium-pressure piston (7) on the high-pressure piston (6).

5. Hydraulic accumulator arrangement (1) according to any of the preceding claims, **characterized by** limiting stops (15, 16, 17) for limiting a movement of the high-pressure piston (6) and/or of the medium-pressure piston (7).

6. Hydraulic accumulator arrangement (1) according to Claim 5, **characterized in that** the medium-pressure piston (7) on its side remote from the medium-pressure storage chamber (4) delimits the atmospheric-pressure storage chamber (5).

7. Hydraulic accumulator arrangement (1) according to Claim 6, **characterized in that** the medium-pressure piston (7) is guided in a longitudinal moveable manner within the housing (2) and two stops (16, 17) are provided, which stops limit in each case the longitudinal movement of the medium-pressure piston (7) in one direction.

8. Hydraulic accumulator arrangement (1) according to Claim 7, **characterized in that** the medium-pressure piston (7) comprises two valves (18, 19) that cooperate in each case with a stop (16, 17) and, as the medium-pressure piston (7) comes into contact with the respectively associated stop (16, 17), connect an external connection (12) of the housing (2) and the atmospheric-pressure storage chamber (5) with the medium-pressure storage chamber (4).

## Revendications

1. Agencement ( 1 ) d'accumulateur hydraulique pour un frein hydraulique comprenant une chambre ( 3 ) d'accumulateur sous haute pression, une chambre ( 4 ) d'accumulateur sous pression moyenne et une chambre ( 5 ) d'accumulateur à la pression atmosphérique, la chambre ( 3 ) d'accumulateur sous haute pression, la chambre ( 4 ) d'accumulateur sous pression moyenne et la chambre ( 5 ) d'accumulateur à la pression atmosphérique étant disposées dans une enveloppe ( 2 ) commune qui, ensemble avec un piston ( 6 ) de haute pression guidé de manière mobile dans l'enveloppe ( 2 ), délimite la chambre ( 3 ) d'accumulateur sous haute pression,
**caractérisé en ce que**
l'enveloppe ( 2 ) délimite, ensemble avec un piston ( 7 ) de pression moyenne disposé dans l'enveloppe ( 2 ), la chambre ( 4 ) d'accumulateur sous pression moyenne,
dans lequel un ressort ( 13 ) de haute pression disposé dans l'enveloppe ( 2 ) s'appuie, à l'extérieur de la chambre ( 3 ) d'accumulateur sous haute pression, sur un piston ( 6 ) de haute pression et un ressort ( 14 ) de moyenne pression, disposé dans l'enveloppe ( 2 ), s'appuie, à l'extérieur de la chambre ( 4 ) d'accumulateur sous pression moyenne, sur le piston ( 7 ) de pression moyenne.

2. Agencement ( 1 ) d'accumulateur hydraulique suivant la revendication 1,
**caractérisé en ce que**
l'enveloppe ( 2 ) est conformée de manière cylindrique creuse, la chambre ( 3 ) d'accumulateur sous haute pression et la chambre ( 4 ) d'accumulateur sous pression moyenne étant constituées, sur des côtés éloignés l'un de l'autre, de l'enveloppe ( 2 ) cylindrique creuse.

3. Agencement ( 1 ) d'accumulateur hydraulique suivant la revendication 2,
**caractérisé en ce que**
le ressort ( 14 ) de pression moyenne et le ressort ( 13 ) de haute pression sont constitués sous la forme de ressorts spirales, le ressort ( 14 ) de pression moyenne s'étendant à l'intérieur du ressort ( 13 ) de haute pression ou le ressort ( 13 ) de haute pression s'étendant à l'intérieur du ressort ( 14 ) de pression moyenne.

4. Agencement ( 1 ) d'accumulateur hydraulique suivant la revendication 3,
**caractérisé en ce que**
le ressort ( 13 ) de haute pression est appuyé, par son côté éloigné du piston ( 6 ) de haute pression, sur l'enveloppe ( 2 ), le ressort ( 14 ) de pression moyenne étant appuyé, par son côté éloigné du piston ( 7 ) de pression moyenne, sur le piston ( 6 ) de haute pression.

5. Agencement ( 1 ) d'accumulateur hydraulique suivant l'une des revendications précédentes,
**caractérisé**
**par** des limitations ( 15, 16, 17 ) par butée pour limiter un déplacement du piston ( 6 ) de haute pression et/ou du piston ( 7 ) de pression moyenne.

6. Agencement ( 1 ) d'accumulateur hydraulique suivant la revendication 5,
**caractérisé en ce que**
le piston ( 7 ) de pression moyenne limite, du côté de son côté éloigné de la chambre ( 4 ) d'accumulateur sous pression moyenne, la chambre ( 5 ) d'accumulateur à la pression atmosphérique.

7. Agencement ( 1 ) d'accumulateur hydraulique suivant la revendication 6,
**caractérisé en ce que**
le piston ( 7 ) de pression moyenne est guidé suivant un mouvement longitudinal dans l'enveloppe ( 2 ) et il est prévu deux butées ( 16, 17 ) qui limitent le mouvement longitudinal du piston ( 7 ) de pression moyenne, dans respectivement un sens.

8. Agencement ( 1 ) d'accumulateur hydraulique suivant la revendication 7,
**caractérisé en ce que**
le piston ( 7 ) de pression moyenne a deux vannes ( 18, 19 ), qui coopèrent respectivement avec une butée ( 16, 17 ) et lors du contact du piston ( 7 ) de pression moyenne avec la butée ( 16, 17 ) associée respectivement, la chambre ( 5 ) d'accumulateur à la pression atmosphérique ou un raccord ( 12 ) extérieur de l'enveloppe ( 2 ) communique avec la chambre ( 4 ) d'accumulateur sous pression moyenne.
